**Europäisches Patentamt**

**European Patent Office**

**Office européen des brevets**

(19)

(11) Veröffentlichungsnummer : **0 191 171 B2**

(12) ## NEUE EUROPÄISCHE PATENTSCHRIFT

(45) Veröffentlichungstag der neuen Patentschrift :
**21.10.92 Patentblatt 92/43**

(51) Int. Cl.⁵ : **F16L 23/00**

(21) Anmeldenummer : **85115521.8**

(22) Anmeldetag : **06.12.85**

(54) **Flanschverbindung.**

(30) Priorität : **17.12.84 DE 3445975**
**02.12.85 DE 3542593**

(43) Veröffentlichungstag der Anmeldung :
**20.08.86 Patentblatt 86/34**

(45) Bekanntmachung des Hinweises auf die
Patenterteilung :
**25.10.89 Patentblatt 89/43**

(45) Bekanntmachung des Hinweises auf die
Entscheidung über den Einspruch :
**21.10.92 Patentblatt 92/43**

(84) Benannte Vertragsstaaten :
**DE FR GB**

(56) Entgegenhaltungen :
**DE-A- 1 806 617**

(56) Entgegenhaltungen :
**DE-A- 3 320 665**
**DE-U- 1 745 873**
**FR-A- 2 517 789**
**US-A- 3 820 830**
**US-A- 3 905 090**
**US-A- 3 930 656**
**Prospekt "Lattyrit super oil multiservice"**
**Prospekt "Lattyrit metallic"**
**Dokument der Firma Sigri Electrographit Gmbh**

(73) Patentinhaber : **SIEMENS AKTIENGESELLSCHAFT**
**Wittelsbacherplatz 2**
**W-8000 München 2 (DE)**

(72) Erfinder : **Kanczarek, Thaddaeus-Anton, Dipl.-Ing.**
**Andreas-Paul-Strasse 66**
**W-8521 Spardorf (DE)**

## Beschreibung

Die Erfindung betrifft eine Flanschverbindung mit einem zwischen den einander zugewandten planen Dichtungsflächen der miteinander zu verbindenden Flansche eingelegten, scheibenförmigem Grundkörper aus inkompressiblem Material, mit einer der lichten Weite der Flansche angepaßten zentralen Bohrung und mit mindestens einer, eine Dichteinlage aus expandiertem Graphit tragenden Ringnut, wobei die in die Ringnut eingelegte Dichteinlage vor dem Zusammenbau der Flansche um einen Betrag $\Delta$ h höher ist als die Höhe der Ringnut, welche so bemessen ist, daß die Dichteinlage bei am Grundkörper anliegendem Flansch unter Ausnutzung ihrer Rückfedereigenschaften um einen Betrag zusammengepreßt ist, und wobei das Volumen einer jeden Ringnut so bemessen ist, daß sie die Einlage nach dem Zusammenbau mit Hilfe der Dichtflächen der Flansche allseitig umschließt.

Es ist bekannt, Flansche unter Zwischenlage einer abdichtenden Weichstoffeinlage miteinander zu verschrauben. Bei solchen Flanschanordnungen muß die zwischenliegende Weichstoffeinlage die gesamte Anpreßkraft der Flansche übernehmen. Das sind sowohl die durch die Schraubenspannung erzeugte Anpreßkraft als auch zusätzliche Kräfte, die über die Rohrleitungen auf den Flansch übertragen werden. Diese zusätzlichen Kräfte können mitunter die zulässige Flächenpressung der Weichstoffeinlage einseitig übersteigen. Sie sind in den seltensten Fällen konstant und können, wie beispielsweise die durch Wärmedehnung erzeugten Kräfte zeitlich veränderlich sein. Es ist auch möglich, daß sie die Flanschverbindung auf Biegen beanspruchen und die Weichstoffeinlage einseitig verstärkt zusammenpressen. Wird die Weichstoffeinlage jedoch zu stark zusammengepreßt, so kann das zur Folge haben, daß sie beim Nachlassen der Preßkraft ihre ursprüngliche Form nicht mehr erlangt und die Flanschverbindung undicht wird.

Bei Flanschverbindungen, die starken Schwankungen der Anpreßkraft ausgesetzt sind, ist es bekannt, Ringnuten für die Weichstoffeinlage in die Dichtflächen einzudrehen. Die Weichstoffeinlagen werden dann so dimensioniert, daß sie aus den Ringnuten vorstehen. Bei solchen Flanschanordnungen ist nur eine begrenzte Kompression der Weichstoffeinlage möglich. Die maximal mögliche Kompression der Weichstoffeinlage ist dann erreicht, wenn die metallischen Dichtflächen der beiden Flansche unmittelbar aufeinander liegen. Um die Weichstoffeinlage nicht zu überdrücken oder zu zerstören ist das Volumen der Weichstoffeinlage und der Ringnuten bei solchen Flanschen exaktz aufeinander abzustimmen. Bei richtiger Abstimmung des Volumens der Weichstoffeinlage und des Volumens der Ringnuten können die Flansche so stark aneinander gepreßt werden, daß die Dichtflächen der Flansche unmittelbar aneinander liegen, ohne daß ein Überdrücken und Undichtwerden der Weichstoffeinlage erfolgt. Die Flanschverbindung ist dann starr. Bei dieser Lösung ist es aber nachteilig, daß die Flansche durch die Ringnuten geschwächt werden. Dies muß durch entsprechende Auslegung der Flansche berücksichtigt werden und führt zu bedeutend schwereren und teureren Flanschen.

Durch die FR-PS 2 517 789 ist bereits eine Flanschverbindung bekannt geworden, bei der Dichteinlagen aus expandiertem Graphit verwendet werden und die ohne Rillen in den einander zugewandten Dichtflächen der Flansche auskommt. Bei dieser vorbekannten Flanschverbindung ist ein Grundkörper zwischen den Flanschen eingelegt, der aus zwei konzentrischen Ringen besteht. Zwischen diesen konzentrischen Ringen des Dichtkörpers wird eine Dichteinlage aus expandiertem Graphit eingelegt. Die einander zugewandten Innenflächen der beiden konzentrischen Ringe des Grundkörpers sind keilriemenförmig ausgedreht und an ihren vorstehenden Rändern etwas aufgebogen. Vor dem Einbau muß daher diese Dichteinlage in eine Form eingelegt und gepreßt werden. Dabei preßt sich der expandierte Graphit in die Ausnehmung zwischen den beiden konzentrischen Ringen und werden die aufgebogenen Ränder dieser konzentrischen Ringe plan gedrückt. Nach dem Zusammenpressen der Dichtung und dem Zusammenbau der beiden Flansche übernimmt die zu beiden Seiten des Grundkörpers um den Betrag "h" vorstehende Dichtlinse aus expandierten Graphit die Dichtung der Flanschverbindung. Eine solche Flanschverbindung läßt sich mit gutem Erfolg immer dort einsetzen, wo der Druck des Mediums keine stärkere Flächenpressung der Dichteinlage als 100 Newton pro mm$^2$ erfordert. Infolge der relativ geringen, radialen Dichttiefe, d.h. der Länge des Kriechweges für das Medium, ist bei der gegebenen noch zulässigen Flächenpressung der Einsatzbereich solcher Dichtungen auf niedere bis mittlere Drücke des Mediums beschränkt. Beim Einsatz, bei höheren Drücken und entsprechend stärkerer Anpressung der beiden Flansche an die Dichtung kann es beim Betrieb zu einem plötzlichen Abgleiten der einzelnen molekularen Gitterebenen des Graphits und damit zu einer Zerstörung der Struktur der Graphiteinlage, mit der Folge eines plötzlichen Versagens der Dichtung kommen.

Hierfür ursächlich ist die Eigenschaft des Graphits, daß die Flächenpressung nicht beliebig hoch getrieben werden kann, sondern im Bereich von ca. 100 bis 200 Newton pro mm$^2$ je nach Ausgangsdicke des Graphits einen Wert erreicht, bei dem die Kohlenstoffgitterebenen des Graphits aufeinander zu gleiten beginnen. Dies führt dazu, daß Graphitdichtungen beim Überschreiten dieser maximal zulässigen Flächenpressung anfangen seitlich wegzufließen. Dies kann zu einem plötzlichen Versagen der eingebauten Flachdichtungen führen.

Zum Auffangen des Graphits ist gemäß der FR-PS 2 517 789 eine zusätzliche Rinne vorgesehen.

Der Erfindung liegt die Aufgabe zugrunde, eine Flanschverbindung anzugeben, die für den Hochdruckbereich geeignet ist und bei der keine Gefahr eines plötzlichen Versagens der Dichteinlage aus expandiertem Graphit besteht. Es soll beim Zusammenbau der Flanschverbindung kein Graphit aus der mindestens einen Ringnut herausgelangen können.

Die Aufgabe wird gemäß der Erfindung dadurch gelöst, daß die Ringnut im Inneren einer flachen Einsenkung liegt und daß der Betrag, um den die Dichteinlage zusammengepreßt ist, einer Flächenpressung von mehr als 100 N/mm² entspricht.

Weitere vorteilhafte Ausgestaltungen sind den Ansprüchen 2 bis 17 zu entnehmen.

Infolge der vollständigen Kammerung der Einlage einerseits und der entsprechenden Wahl des Betrages $\Delta$ h, um den die Einlage vor dem Einbau höher ist als die Höhe der Ringnut, in der sie eingelegt wird, läßt sich beim Zusammenbau der Flansche eine Kompression der Graphiteinlage erzeugen, bei der die Flächenpressung weit über 100 bis 200 Newton pro mm² ansteigt. Bei dieser Flächenpressung könnten zwar die Graphitgitterebenen aufeinander gleiten. Infolge der vollständigen Kammerung bleiben sie jedoch gefangen. Weil die Graphitteilchen nicht mehr seitlich aus dem Flansch herausgedrückt werden können, wird so, trotz der hohen Flächenpressung, ein Versagen der Dichtung ausgeschlossen. Dabei werden jedoch sehr enge Fertigungstoleranzen für den Metallstützring erforderlich. Die hohe Flächenpressung ihrerseits wiederum macht die Graphiteinlage infolge molekularer Verzahnung für das Betriebsmedium undurchlässig und ermöglicht den Einsatz bei entsprechend hoch verdichteten Medien.

Die Verwendung durchgehender Ringnuten mit der Folge der Unterteilung des Grundkörpers in mehrere konzentrische Ringe führt nicht nur zu einer Verbilligung der Herstellung des Grundkörpers im Vergleich zu einem Grundkörper bei dem Nuten eingedreht werden müssen, sondern auch zu großmöglicher Höhe der Dichteinlage bei gegebener Grundlörperhöhe. Letzteres wiederum führt zu einer Maximierung sowohl des Toleranzbereichs für die Höhe der Dichteinlage, als auch des Rückfederweges der Dichteinlage. Die Vergrößerung des Rückfederweges verringert aber wiederung die Gefahr des Undichtwerdens bei Biegebeanspruchungen der Flanschverbindung.

Bei der radialen Ausdehnung der Ringnut in Bereiche grösser als 0,5 der Differenz zwischen Innen- und Außendurchmesser der Flansche wird die hohe Dichtkraft der überdrückten Einlage aus expandiertem Graphit über einen verhältnismäßig langen, radialen Kriechweg aufrecht erhalten. Bei dieser Konstruktion, die den Verzicht auf mehrere konzentrische Dichteinlagen voraussetzt, ergibt sich eine Maximierung der Dichtkraft.

Weitere Einzelheitend er Erfindung werden anhand mehrerer in den Figuren dargestellter Ausführungsbeispiele erläutert. Es zeigen:

Fig. 1 einen Querschnitt durch eine Flanschanordnung mit zwischengelegtem erfindungsgemäßen Grundkörper mit vier konzentrischen Weichstoffeinlagen,

Fig. 2 einen Querschnitt durch eine andere Flanschanordnung, bei der der Grundkörper schräggestellte Ringnuten für die Weichstoffeinlage besitzt,

Fig. 3 einen Querschnitt durch eine Flanschanordnung, bei der der Grundkörper zwei gegenüberliegende Ringnuten besitzt,

Fig. 4 einen Querschnitt durch eine Flanschanordnung, bei der die gegenüberliegenden Weichstoffeinlagen zu einer einzigen Weichstoffeinlage zusammengefaßt sind,

Fig. 5 den aufgeschnittenen Randbereich einer anderen erfindungsgemäßen Flanschverbindung,

Fig. 6 ein Diagramm der Abhängigkeit der Dicke einer Einlage aus expandierten Graphit von der Flächenpressung bei erstmaliger Kompression und

Fig. 7 ein Diagramm der Rückfederung von expandiertem Graphit in Abhängigkeit von der Vorpressung und der Ausgangsdicke der Einlage.

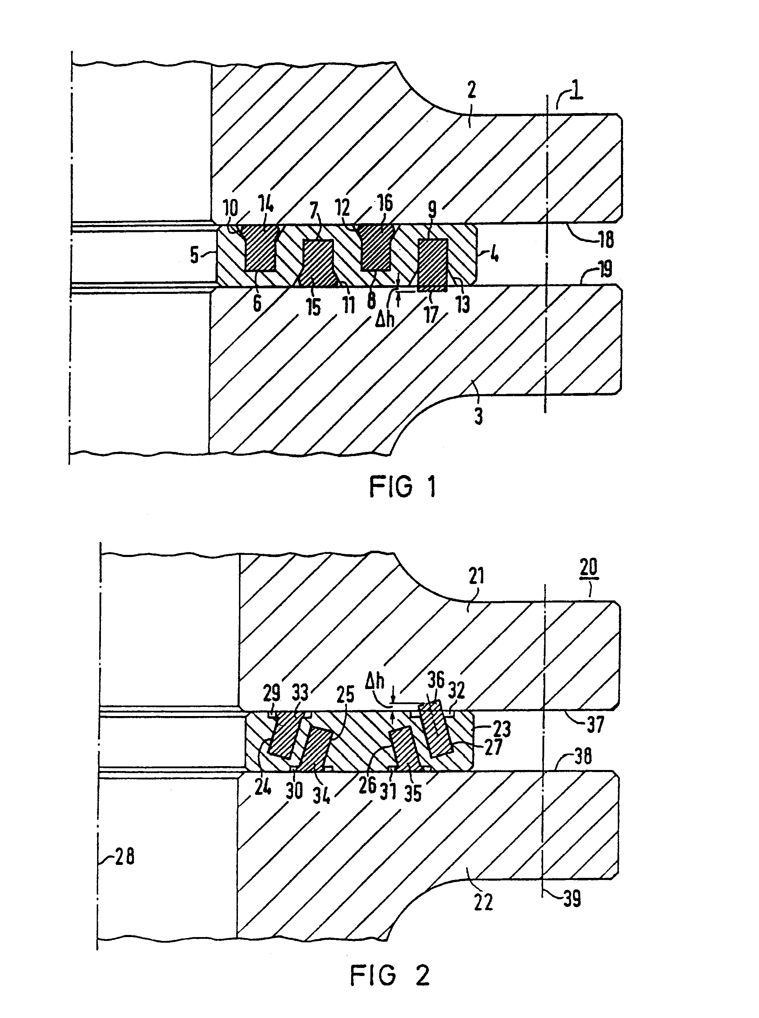

Die Darstellung der Fig. 1 zeigt den Randbereich einer Flanschverbindung 1, bei der zwischen den beiden Flanschen 2, 3 ein scheibenförmiger Grundkörper 4 aus dem gleichen Material wie die Flansche 2, 3 im Ausführungsbeispiel aus Stahl eingelegt ist. Dieser inkompressible Grundkörper 4 ist mit einer zentralen Bohrung 5, die zur lichten Weite der Flansche 2, 3 paßt, versehen und trägt abwechselnd auf einander gegenüberliegenden Seiten insgesamt vier konzentrische Ringnuten 6, 7, 8, 9. Die Ringnuten liegen eine jede in einer flachen V-förmigen Einsenkung 10, 11, 12, 13. In jede dieser Ringnuten 6, 7, 8, 9 ist eine Weichstoffeinlage 14, 15, 16, 17 eingelegt. Die Fig. 1 zeigt die inneren Weichstoffeinlagen 14, 15, 16 in der Form, die Letzteren bei fest eingespannten Flanschen einnehmen. Dagegen ist die äußere Weichstoffeinlage 17 mit der Kontur eingezeichnet, die sie vor dem Zusammenschrauben der Flansche 2, 3 hatte. Man erkennt an diesem Zeichnungsbeispiel, daß die Weichstoffeinlagen beim Zusammenpressen der Flansche 2, 3 komprimiert und überstehendes Material in die flachen Einsenkungen 10, 11, 12, 13 seitlich der Ringnuten 6, 7, 8, 9 hereingepreßt wird.

Es ist ein besonderer Vorteil dieser erfindungsgemäßen Flanschanordnung 1, daß normale handelsübliche Flansche 2, 3 ohne Ringnuten verwendet werden können. Jede Schwächung der Flansche, durch Einbringung von Ringnuten, wird vermieden. Vor dem Zusammenschrauben der beiden Flansche 2, 3 müssen lediglich an die Ringnuten des Grundkörpers 4 angepaßte Weichstoffeinlagen 14, 15, 16, 17 eingesetzt werden. Der Querschnitt der Weichstoffeinlagen ist dabei so zu bemessen, daß er die Ringnuten ganz ausfüllt und zusätzlich um einen Betrag Δh über der erhabenen Oberfläche des Grundkörpers aufragt. Δh ist dabei in Abhängigkeit von den elastischen Eigenschaften der Weichstoffeinlage so zu wählen, daß das über der erhabenen Oberfläche des Grundkörpers aufragende Volumen der jeweiligen Weichstoffeinlage, beim Zusammenschrauben der beiden Flansche 2, 3 bis zur Anlage der Dichtflächen 18, 19 der beiden Flansche unmittelbar am Grundkörper elastisch in die jeweilige Ringnut eindrückbar ist. Ein noch stärkeres Zusammendrücken und Überdrücken der Weichstoffeinlage 14, 15, 16, 17 ist nicht möglich, weil alle übersteigenden Kräfte vom Grundkörper 4 aufgenommen werden, so daß es zu keiner Relativbewegung der beiden aneinander liegenden Flansche 2, 3 mehr kommen kann. Die kegelförmige Einsenkung 10 bis 13 hat dabei lediglich die Aufgabe, zu verhindern, daß beiseite gedrücktes Material der Weichstoffeinlage in den Bereich der nicht eingesenkten Oberfläche des Grundkörpers gelangt und die unmittelbare Anlage des Grundkörpers an die Dichtflächen 18, 19 der Flansche verhindert.

Die Fig. 2 zeigt eine etwas andere Ausführungsform der Flanschverbindung 20, bei dem in dem zwischen den beiden Flanschen 21,22 engepreßten inkompressiblen Grundkörper 23 auf beiden Seiten je zwei Ringnuten 24, 25, 26, 27 eingelassen sind, deren Querschnitt paarweise um einen Winkel α schräg zur Symmetrieachse 28 des Grundkörpers 23 ausgerichtet ist. Auch hier liegt wiederum jede Ringnut 24, 25, 26, 27 in einer flachen Einsenkung 29, 30, 31, 32, und ragt die Weichstoffeinlage 33, 34, 35, 36 vor dem Zusammenschrauben der beiden Flansche 21,22 um den Betrag Δh über der nicht eingesenkten Oberfläche des Grundkörpers 23 auf.

Die Handhabung der Weichstoffeinlagen 33, 34, 35, 36 und des inkompressiblen Grundkörpers 23 erfolgt in der gleichen Weise wie das anhand des Ausführungsbeispiels der Fig. 1 beschrieben wurde. Durch die Schrägstellung der Ringnuten 24, 25, 26, 27 im Grundkörper 23 wird dreierlei erreicht. Zum einen können die Weichstoffeinlagen 33, 34, 35 ,36 bei der Montage infolge ihrer formschlüssigen Halterung in den Ringnuten 24, 25, 26, 27 nicht mehr herausfallen. Zum anderen läßt sich so das wirksame Weichstoffvolumen bei gegebener Stärke des Grundkörpers etwas vergrößern. Dies besonders, wenn der Grund der eingedrehten Ringnut, abweichend zum Zeichnungsbeispiel der Fig. 2 parallel zur Dichtfläche der Flansche ausgerichtet wird. Schließlich rücken die Druckpunkte der Weichstoffeinlagen 33, 34, 35, 36 auf beiden Seiten des Grundkörpers 23 näher aneinander. Das hat zur Folge, daß die auf die beiden Flansche 21, 22 von den im Teilkreisdurchmesser 39 angreifenden Schraubkräften ausgeübten Scherkräfte größer werden. Dadurch wird die technisch sinnvolle, maximale Schrägstellung je nach Material der Weichstoffeinlage auf Winkel unter 30 Grad, zum Teil auch unter 20 Grad begrenzt.

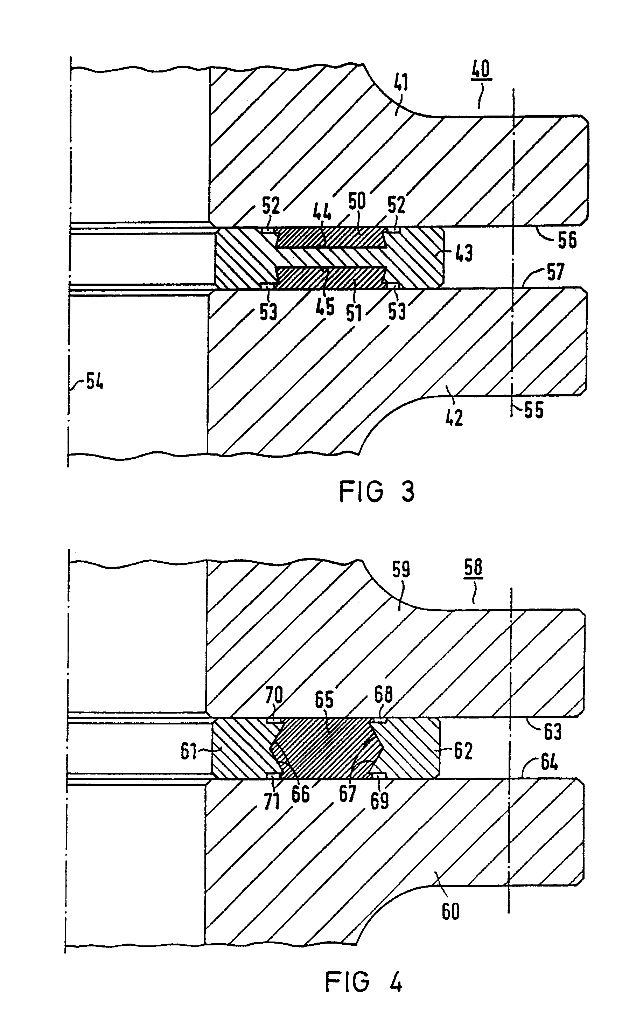

Das Ausführungsbeispiel der Fig. 3 zeigt eine weitere Flanschanordnung 40, bei der der zwischen den beiden Flanschen 41, 42 eingeklemmte Grundkörper beidseitig nur je eine einzige Ringnut 44, 45 trägt. Diese beiden Ringnuten haben den gleichen Radius. Die Seitenflanken 46, 47, 48, 49 der beiden Ringnuten sind leicht hinterdreht, d.h., die Ringnuten sind am Grund etwas breiter als an der Oberfläche des Grundkörpers 43. In den Ringnuten sind die eingelegten Weichstoffeinlagen 50, 51 eingezeichnet. Auch hier wiederum liegen die Ringnuten im Bereich je einer flachen ringförmigen Einsenkung 52, 53 des Grundkörpers 43. Die Symmetrieachse 54 der Flanschanordnung 40 und der Teilkreisdurchmesser 55 für die Schraubverbindungen sind der Orientierung halber angedeutet.

Auch bei dieser Flanschanordnung 40 stehen die Weichstoffeinlagen 50, 51, beispielsweise solche aus expandiertem Graphit, vor dem Zusammensschrauben der beiden Flansche 41, 42 um ein Betrag Δh über die nicht eingesenkte Oberfläche des Grundkörpers 43 vor. Dieser Betrag Δh ist hier im Verhältnis der gegenüber dem Ausführungsbeispiel der Fig. 1 geringeren Nutentiefe kleiner zu wählen, um die gleiche elastische Einfederung der Weichstoffeinlage zu erzeugen. Im übrigen gilt das gleiche, was anhand des Ausführungsbeispieles in Fig. 1 hierzu beschrieben worden ist. Infolge der geringfügigen Hinterdrehung der Ringnuten 44, 45 bleiben auch hier die Weichstoffeinlagen, sobald sie in den Grundkörper 43 eingesetzt wurden, formschlüssig in diesen hängen. Das erleichtert die Montage. Beim Zusammenschrauben der beiden Flansche 41, 42 werden auch hier die Weichstoffeinlagen elastisch zusammengedrückt und seitlich herausgedrücktes Material der Weichstoffeinlagen in den flachen Einsenkungen 52, 53 aufgenommen, ohne das dieses Material die unmittelbare Auflage der Dichtflächen 56, 57 der beiden Flansche 41, 42 an den Grundkörper 43 behindern kann. Dadurch wird auch bei dieser Flanschanordnung eine starre Flanschverbindung erreicht und wird ein Überdrücken der richtig dimensionierten Weichstoffeinlagen 50, 51 verhindert.

Die Fig. 4 zeigt eine Flanschanordnung 58, die eine Abwandlung der Flanschanordnung 40 des Ausführungsbeispieles der Fig. 3 ist. Der zwischen den beiden Flanschen 59, 60 eingespannte Grundkörper ist hier durch Vertiefung der Nuten in zwei konzentrische Grundkörperringe 61, 62 aufgeteilt. Zwischen diesen ist eine beidseitig an den Dichtflächen 63, 64 der Flansche 59, 60 zur Anlage bringbare Weichstoffeinlage 65 eingelegt dargestellt. Die der Weichstoffeinlage zugewandten Flächen 66, 67 der Grundkörperringe 61, 62 sind leicht kegelförmig eingedreht. Eine ballige Eindrehung wäre ebensogut möglich. Die der Dichtfläche 63, 64 der Flansche 59, 60 zugewandten Ränder besitzen auf der Seite der Weichstoffeinlage flache Einsenkungen 68, 69, 70, 71. Im übrigen entsprechen die beiden Flansche 59, 60 den Flanschen in den Ausführungsbeispielen der übrigen Figuren.

Infolge der Verwendung von zwei konzentrischen ringförmigen Grundkörpern 61, 62 ist der Bearbeitungsaufwand und die Herstellung gegenüber dem Ausführungsbeispielen in den übrigen Figuren verringert. Auch bei diesem Grundkörper wird die zwischen den beiden konzentrischen Grundkörperringen 61, 62 eingedrückte Weichstoffeinlage 65 formschlüssig zwischen den beiden konzentrischen Grundkörperringen gehalten und kann mit diesen leicht zwischen die miteinander zu verschraubenden Flansche 59, 60 geschoben werden. Dadurch, daß nur ein einziger Weichkörperring 65 verwendet ist, der an seinen beiden gegenüberliegenden Seiten an den Dichtflächen 63, 64 der beiden Flansche 59, 60 anliegt, kann bei gleichem Flanschabstand die größtmögliche Höhe der Weichkörpereinlage erreicht werden und kann der Betrag $\Delta h$ um den die nicht zusammengepreßte Weichstoffeilage 65 über den Rand der beiden konzentrischen Grundkörperringe 61, 62 vorsteht, größer gewählt werden als dies beim Ausführungsbeispiel der Fig. 3 möglich ist. Dadurch sind aber auch die zulässigen Toleranzen für die Gesamthöhe der Weichstoffeinlage größer als beim Ausführungsbeispiel der Fig. 3

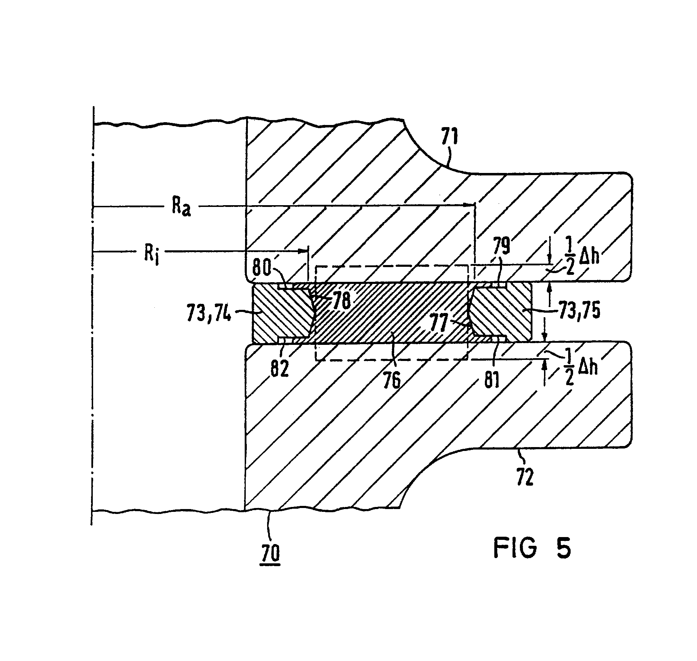

Die Fig. 5 zeigt den Randbereich einer anderen erfindungsgemäßen Flanschverbindung 70. Zwischen den beiden Flanschen 71, 72 ist ein scheibenförmiger Grundkörper 78 aus inkompressiblen Material, im vorliegenden Fall aus Stahl, eingelegt. Dieser inkompressible Grundkörper 78 besteht im Ausführungsbeispiel aus zwei konzentrischen Ringen 74, 75. Zwischen diese beiden Ringe ist eine Dichtstoffeinlage 76 aus expandiertem Graphit eingelegt. Die einander zugewandten inneren Stirnflächen 77, 78 des äußeren und inneren Ringes 74, 75 des Grundkörpers 78 sind giebelförmig angeschrägt. Außerdem sind die beiden, den Flanschflächen zugewandten Seiten der konzentrischen Ringe, im Bereich der Dichtstoffeinlage mit einer Eindrehung 79, 80, 81, 82 versehen. Wie in der Fig. 1 angedeutet ist, hatte die Dichtstoffeinlage vor dem Zusammenbau der Flanschverbindung die gestrichelt angedeutete Höhe besessen. Sie war damit um den Betrag $\Delta h$ höher als der Grundkörper 78.

Beim Zusammenbau, d.h. bei der Verschraubung der beiden Flansche 71, 72 wurde die Dichtstoffeinlage 7 auf die Höhe des Grundkörpers 73 komprimiert. Dabei wurde sie im Randbereich etwas in die Eindrehung 79, 80, 81, 82 der beiden konzentrsichen Ring 74, 75 hineingedrückt.

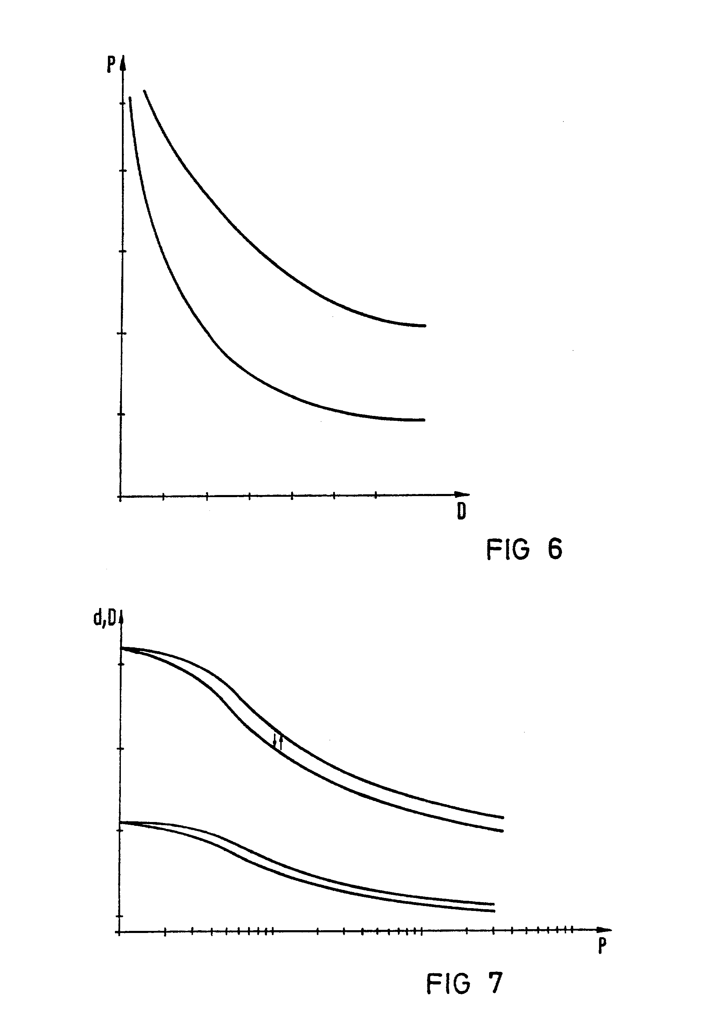

Die Fig. 6 zeigt die Abhängigkeit der Dicke einer neuen, zuvor noch nicht komprimierten Einlage aus expandiertem Graphit, von der auf diese Einlage ausgeübten Flächenpressung. Man sieht daraus, daß die Flächenpressung "P" bei zunehmendem Zusammendrücken der Einlage aus expandiertem Graphit, d.h. mit zunehmender Verringerung der Dicke "D" exponentiell ansteigt. In diesem Diagramm ist auch jene maximale Zusammenpressung eingetragen, bei der eine Flächenpressung von 100 Newton pro mm$^2$ erreicht wird, und oberhalb derer bisher mit einem plötzlichen Versagen der Dichtung zu rechnen war. Für dieses plötzliche Versagen von Dichtungen aus expandiertem Graphit wird die flächige Gitterstruktur des Graphits verantwortlich gemacht. Die einzelnen Gitterebenen werden im wesentlichen durch Van der Waal'sche Kräfte aufeinander festgehalten. Bei Überschreiten dieser Haftkräfte können die einzelnen Gitterebenen voneinander abrutschen und die Dichteinlage auseinanderfließen.

Die Fig. 7 zeigt die Rückfederung "d" der Einlage aus expandiertem Graphit in Abhängigkeit von der zuvor ausgeübten maximalen Flächenpressung "P". Man erkennt aus diesem Diagramm, daß das expandierte Graphit, nachdem es einmal komprimiert worden ist, nicht mehr auf seine Ausgangsdicke "D" zurückfedert, sondern daß seine Rückfederung "d" ausgehend von der Dicke "D" im komprimierten Zustand nur um einen bestimmten, von der ausgeübten Flächenpressung nahezu unabhängigen Prozentsatz der ursprünglichen Ausgangsdicke zurückfedert. Aus dieser Fig. 7 wird deutlich, welche Bedeutung der Ausgangsdicke der Einlage aus expandiertem Graphit für die Rückfedereigenschaft - welche ja für Dichtheit bei Biegebeanspruchungen der Flanschverbindung maßgebend ist - zukommt. Da aber die Ausgangsdicke abhängig ist sowohl von der Höhe des Grundkörpers, als auch von der Kompression, der man die Graphiteinlage beim Zusammenbau der Flanschverbindung unterwirft, ergeben sich umso günstigere Eigenschaften bei einer gegebenen Grundkörperhöhe, je höher man die Flächenpressung wählt. Es ist nun ein besonderer Vorteil der erfindungsgemäßen Konstruktion, daß sie infolge der vollständigen Kammerung der Graphiteinlage Flächenpressungen zuläßt, die weit jenseits jener 100 Newton mm$^2$ liegen, die normalerweise nicht berschritten werden dürfen.

Zur Erzielung einer möglichst hohen Dichtheit wird daher der Grundkörper bei der erfindungsgemäßen Flanschverbindung zur Maximierung der Einlagenhöhe aus konzentrischen Ringen aufgebaut. Die Höhe der Graphiteinlagen wird sodann von dem erstmaligen Einbau so gewählt, daß sie beim Zusammenpressen auf die Höhe des Grundkörpers einer Flächenpressung unterliegt, die weit über 100 Newton pro mm$^2$ beträgt. Wenngleich bei diesen extrem hohen Flächenpressungswerten auf die Graphitstruktur Kräfte ausgeübt werden, die oberhalb der Haftkräfte liegen, mit denen die einzelnen, schichtförmigen Strukturen des Graphits aufeinander haften, so kann der Graphit jedoch infolge der beim vollständigen Zusammenbau des Flansches unmittelbar aufeinandergepreßten Stahlflächen des Flansches und des Grundkörpers nicht aus der zwischen dem äußeren und inneren Ring des Grundkörpers und den beiden anliegenden Flanschflächen gebildeten Kammer entweichen. Auf diese Weise ist ein Versagen der Dichtung trotz dieser extrem hohen Flächenpressung ausgeschlossen. Darüber hinaus wird die Undurchlässigkeit des Graphits für jedes Betriebsmedium durch diese extreme Flächenpressung erhöht. Hinzu kommt, daß durch die radiale Länge der Anlagefläche der Dichteinlage am Flansch lange Kriechwege entstehen, die äußerst hohen Mediumsdrücken widerstehen können.

| Bezugszeichenliste | | |
|---|---|---|
| Flanschenanordnung | 1, 40 | 20, 58 |
| Flansch | 2, 3, 41, 42 | 21, 22, 59, 60 |
| Grundkörper | 4, 43 | 23 |
| Zentrale Bohrung | 5 | |
| Ringnut | 6, 7, 8, 9, 44, 45 | 24, 25, 26, 27 |
| flache Einsenkung | 10, 11, 12, 13, 52, 53 | 29, 30, 31, 32, 68, 69, 70, 71 |
| Weichstoffeinlage | 14, 15, 16, 17, 50, 51 | 33, 34, 35, 36, 65 |
| Dichtfläche | 18, 19, 56, 57 | 37, 38, 63, 64 |
| Symmetrieachse | 28 | 54 |
| Teilkreisdurchmesser | 39 | 55 |
| Seitenflanke | 46, 47, 48, 49 | |
| Grundkörperring | | 61, 62 |
| Fläche | | 66, 67 |
| Flanschverbindung | 70 | |
| Flansch | 71, 72 | |
| Grundkörper | 73 | |
| Ringe | 74, 75 | |
| Dichtstoffeinlage | 76 | |
| Stirnfläche | 77, 78 | |
| Eindrehung | 79, 80, 81, 82 | |

## Patentansprüche

1. Flanschverbindung mit einem zwischen den einander zugewandten planen Dichtungsflächen der miteinander zu verbindenden Flansche (2, 3, 21, 22, 41, 42, 59, 60, 71, 72) eingelegten, scheibenförmigem Grundkörper (4, 23, 43, 61, 62, 73) aus inkompressiblem Material, mit einer der lichten Weite der Flansche angepaßten zentralen Bohrung (5) und mit mindestens einer eine Dichteinlage (14 bis 17, 33 bis 36, 50, 51, 65, 76) aus expandiertem Graphit tragenden Ringnut (6 bis 9, 24 bis 27, 44, 45), wobei die in die Ringnut (6 bis 9, 24 bis 27, 44, 45) eingelegte Dichteinlage (14 bis 17, 33 bis 36, 50, 51, 65, 76) vor dem Zusammenbau der Flansche (2, 3, 21, 22, 41, 42, 59, 60, 71, 72) um einen Betrag Δh höher ist als die Höhe der Ringnut (6 bis 9, 24 bis 27, 44, 45), welche so bemessen ist, daß die Dichteinlage (14 bis 17, 33 bis 36, 50, 51, 65, 76) bei am Grundkörper (4, 23, 43, 61, 62, 73) anliegendem Flansch (2, 3, 21, 22, 41, 42, 59, 60, 71, 72) unter Ausnutzung ihrer Rückfedereigenschaften um einen Betrag zusammengepreßt ist, und wobei das Volumen einer jeden Ringnut (6 bis 9, 24 bis 27, 44, 45) so bemessen ist, daß sie die Einlage (14 bis 17, 33 bis 36, 50, 51, 65, 76) nach dem Zusammenbau mit Hilfe der Dichtflächen der Flansche (2, 3, 21, 22, 41, 42, 59, 60, 71, 72) allseitig umschließt,
**dadurch gekennzeichnet,**
daß die Ringnut (6 bis 9, 24 bis 27, 44, 45) im Inneren einer flachen Einsenkung (10 bis 13, 29 bis 32, 52, 53, 68 bis 71, 79 bis 82) liegt und daß der Betrag, um den die Dichteinlage (14 bis 17, 33 bis 36, 50, 51, 65, 76) zusammengepreßt ist, einer Flächenpressung von mehr als 100 N/mm$^2$ entspricht.

2. Flanschverbindung nach Anspruch 1,
**dadurch gekennzeichnet,**

daß der Grundkörper (61, 62, 73) durch eine oder mehrere durchgehende Ringnuten in zwei oder mehrere konzentrische Ringe (61, 62, 74, 75) aufgeteilt ist.

3. Flanschverbindung nach Anspruch 2,
   **dadurch gekennzeichnet,**
   daß die radiale Ausdehnung der Ringnut definiert als Ra - Ri im Bereich ihrer Anlageflächen an die Flansche (71, 72) größer als 0,5 x der Differenz zwischen $R_A$ - $R_I$ der Flansche ist.

4. Flanschverbindung nach Anspruch 2,
   **dadurch gekennzeichnet,**
   daß die radiale Ausdehung der Ringnut definiert als Ra - Ri größer als die doppelte Höhe des Grundkörpers (73) ist.

5. Flanschverbindung nach Anspruch 1,
   **dadurch gekennzeichnet,**
   daß die Höhe $\Delta$ h, mit der die vollständig in die Ringnut eingelegte Dichteinlage (14 bis 17, 33 bis 36, 50, 51, 65, 76) aus expandiertem Graphit insgesamt über den Grundkörper (4, 23, 43, 61, 62, 73) vorsteht so bemessen ist, daß die Dichte der Einlage nach dem Zusammenbau der beiden Flansche (2, 3, 21, 22, 41, 42, 59, 60, 71, 72) über 1,7 bis 2,35 kg pro dm³, bezogen auf den Graphitwerkstoff, liegt.

6. Flanschverbindung nach Anspruch 1,
   **dadurch gekennzeichnet,**
   daß die Ringnuten (6 bis 9, 24 bis 27, 44, 45) einen im wesentlichen rechteckigen Querschnitt aufweisen.

7. Flanschverbindung nach Anspruch 1,
   **dadurch gekennzeichnet,**
   daß die Symmetrieachse des Querschnitts der Ringnut (24 bis 27) schräg zur Sammetrieachse (28) des Grundkörpers (23) gestellt ist.

8. Flanschverbindung nach Anspruch 7,
   **dadurch gekennzeichnet,**
   daß auf entgegengesetzten Seiten des Grundkörpers (23) unmittelbar benachbart eingebrachte konzentrische Ringnuten (24 bis 27) mit ihrem Nutquerschnitt in der gleichen Richtung und um den gleichen Betrag schräggestellt sind.

9. Flanschverbindung nach Anspruch 7,
   **dadurch gekennzeichnet,**
   daß die Schrägstellung der Symmetrieachsen des Querschnitts konzentrischer Ringnuten (24 bis 27) auf der gleichen Seite des Grundkörpers (23) jeweils gegenläufig ist.

10. Flanschverbindung nach Anspruch 1,
    **dadurch gekennzeichnet,**
    daß der Grundkörper (4, 23, 43, 61, 62) aus Metall gefertigt ist.

11. Flanschverbindung nach Anspruch 1,
    **dadurch gekennzeichnet,**
    daß der Grundkörper aus Keramik gefertigt ist.

12. Flanschverbindung nach Anspruch 1,
    **dadurch gekennzeichnet,**
    daß der Grundkörper aus Kohlenstoff gefertigt ist.

13. Flanschverbindung nach Anspruch 1,
    **dadurch gekennzeichnet,**
    daß die Oberfläche der nichteingedrehten Oberflächenteile des Grundkörpers (4, 23, 43, 61, 62) so groß bemessen ist, daß sie die maximale gegenseitige Anpreßkraft der beiden Flansche (2, 3, 21, 22, 41, 42, 59, 60) ohne eigene und ohne Beschädigung der Dichtflächen (18, 19, 27, 28, 56, 57, 63, 64) der Flansche aufnehmen kann.

14. Flanschverbindung nach Anspruch 13,

7

**dadurch gekennzeichnet,**
daß die erhabenen Oberflächenteile des Grundkörpers (4, 23) mit einem weichen Material beschichtet sind.

15. Flanschverbindung nach Anspruch 14,
**dadurch gekennzeichnet,**
eine Beschichtung mit Silber.

16. Flanschverbindung nach Anspruch 14,
**dadurch gekennzeichnet,**
eine Beschichtung mit Kupfer.

17. Flanschverbindung nach Anspruch 1,
**dadurch gekennzeichnet,**
daß die flachen Einsenkungen (10 bis 13) einen trichterförmigen Grundriß haben.

## Claims

1. Flanged joint having a disk-shaped base body (4, 23, 43, 61, 62, 73) which is inserted between the facing planar sealing surfaces of the flanges (2, 3, 21, 22, 41, 42, 59, 60, 71, 72) to be connected with each other and which is made of incompressible material, having a central bore hole (5) which is adapted to the clear width of the flanges and having at least one annular groove (6 to 9, 24 to 27, 44, 45) which supports a sealing insert (14 to 17, 33 to 36, 50, 51, 65, 76) made of expanded graphite, in which case the sealing insert (14 to 17, 33 to 36, 50, 51, 65, 76), which is inserted into the annular groove (6 to 9, 24 to 27, 44, 45), before the assembly of the flanges (2, 3, 21, 22, 41, 42, 59, 60, 71, 72) is higher by an amount Ah than the height of the annular groove (6 to 9, 24 to 27, 44, 45) which is dimensioned such that the sealing insert (14 to 17, 33 to 36, 50, 51, 65, 76) with flange (2, 3, 21, 22, 41, 42, 59, 60, 71, 72) resting against the base body (4, 23, 43, 61, 62, 73), whilst utilizing its resilient properties, is compressed by an amount, and in which case the volume of each annular groove (6 to 9, 24 to 27, 44, 45) is dimensioned such that after assembly it surrounds the insert (14 to 17, 33 to 36, 50, 51, 65, 76) on all sides with the aid of the sealing surfaces of the flanges (2, 3, 21, 22, 41, 42, 59, 60, 71, 72), characterised in that the annular groove (6 to 9, 24 to 27, 44, 45) lies inside a planar depression (10 to 13, 29 to 32, 52, 53, 68 to 71, 79 to 82) and in that the amount by which the sealing insert (14 to 17, 33 to 36, 50, 51, 65, 76) is compressed corresponds to a surface pressure of more than 100 N/mm$^2$.

2. Flanged joint according to claim 1, characterised in that the base body (61, 62, 73) is divided by one or several through annular grooves into two or several concentric rings (61, 62, 74, 75).

3. Flanged joint according to claim 2, characterised in that the radial expansion of the annular groove defined as Ra - Ri in the region of its surfaces of contact on the flanges (71, 72) is greater than 0.5 x the difference between $R_A$ - $R_I$ of the flanges.

4. Flanged joint according to claim 2, characterised in that the radial expansion of the annular groove defined as Ra - Ri is greater than double the height of the base body (73).

5. Flanged joint according to claim 1, characterised in that the height $\Delta h$, with which the sealing insert (14 to 17, 33 to 36, 50, 51, 65, 76), which is completely inserted into the annular groove and is made of expanded graphite, protrudes in total over the base body (4, 23, 43, 61, 62, 73), is apportioned such that the tightness of the insert after the assembly of the two flanges (2, 3, 21, 22, 41, 42, 59, 60, 71, 72) lies above 1.7 to 2.35 kg per dm$^3$, relative to the graphite material.

6. Flanged joint according to claim 1, characterised in that the annular grooves (6 to 9, 24 to 27, 44, 45) have an essentially rectangular cross section.

7. Flanged joint according to claim 1, characterised in that the axis of symmetry of the cross section of the annular groove (24 to 27) is inclined in relation to the axis of symmetry (28) of the base body (23).

8. Flanged joint according to claim 7, characterised in that on opposite sides of the base body (23) concentric annular grooves (24 to 27), which are introduced directly adjacent to each other, are inclined with their groove cross section in the same direction and by the same amount.

9. Flanged joint according to claim 7, characterised in that the inclination of the axes of symmetry of the cross section of concentric annular grooves (24 to 27) runs in an opposite direction in each case on the same side of the base body (23).

10. Flanged joint according to claim 1, characterised in that the base body (4, 23, 43, 61, 62) is made out of metal.

11. Flanged joint according to claim 1, characterised in that the base body is made out of ceramics.

12. Flanged joint according to claim 1, characterised in that the base body is made out of carbon.

13. Flanged joint according to claim 1, characterised in that the surface of the non turned-in surface portions of the base body (4, 23, 43, 61, 62) is dimensioned so that it is so great that it can take up the maximum mutual pressing force of the two flanges (2, 3, 21, 22, 41, 42, 59, 60) without damage to itself or to the sealing surfaces (18, 19, 27, 28, 56, 57, 63, 64) of the flanges.

14. Flanged joint according to claim 13, characterised in that the raised surface portions of the base body (4, 23) are coated with a soft material.

15. Flanged joint according to claim 14, characterised by a coating with silver.

16. Flanged joint according to claim 14, characterised by a coating with copper.

17. Flanged joint according to claim 1, characterised in that the planar depressions (10 to 13) have a funnel-shaped plan.


## Revendications

1. Liaison par brides comprenant une pièce de base (4, 23, 43, 61, 62, 73), en un matériau incompressible, en forme de disque, insérée entre les surfaces d'étanchéité planes tournées l'une vers l'autre des brides (2, 3, 21, 22, 41, 42, 59, 60, 71, 72) à relier entre elles, présentant un alésage (5) central adapté au diamètre intérieur des brides et comportant au moins une gorge annulaire (6 à 9, 24 à 27, 44, 45) portant une garniture d'étanchéité (14 à 17, 33 à 36, 50, 51, 65, 76) en graphite expansé, la garniture d'étanchéité (14 à 17, 33 à 36, 50, 51, 65, 76) insérée dans la gorge annulaire (6 à 9, 24 à 27, 44, 45) étant, avant l'assemblage des brides (2, 3, 21, 22, 41, 42, 59, 60, 71, 72) plus haute que la hauteur de la gorge annulaire (6 à 9, 24 à 27, 44, 45) d'une quantité $\Delta h$ telle que la garniture d'étanchéité (14 à 17, 33 à 36, 50, 51, 65, 76) est comprimée sur la bride (2, 3, 21, 22, 41, 42, 59, 60, 71, 72) appliquée à la pièce de base (4, 23, 43, 61, 62, 73), en tirant parti de ses propriétés de retour élastique, d'une certaine quantité et le volume de chaque gorge annulaire (6 à 9, 24 à 27, 44, 45) est tel qu'elle entoure la garniture (14 à 17, 33 à 36, 50, 51, 65, 76) de tout côté, après l'assemblage à l'aide des surfaces d'étanchéité des brides (2, 3, 21, 22, 41, 42, 59, 60, 71, 72),
caractérisée en ce que
la gorge annulaire (6 à 9, 24 à 27, 44, 45) se trouve à l'intérieur d'une creusure plate (10 à 13, 29 à 32, 52, 53, 68 à 71, 79 à 82) et la quantité, dont la garniture d'étanchéité (14 à 17, 33 à 36, 50, 51, 65, 76) est comprimée, correspond à une pression superficielle supérieure à 100 N/mm$^2$.

2. Liaison par brides suivant la revendication 1, caractérisée en ce que la pièce de base (61, 62, 73) est subdivisée en deux ou en plusieurs anneaux concentriques (61, 62, 74, 75) par une ou par plusieurs gorges annulaires traversantes.

3. Liaison par brides suivant la revendication 2, caractérisée en ce que l'extension radiale de la gorge annulaire, définie par Ra - Ri, est, dans la région de sa surface d'appui sur la bride (71, 72), supérieure à 0,5 fois la différence entre $R_A$ - $R_I$ de la bride.

4. Liaison par brides suivant la revendication 2, caractérisée en ce que l'extension radiale de la gorge annulaire définie par Ra - Ri est supérieure au double de la hauteur de la pièce de base (73).

5. Liaison par brides suivant la revendication 1, caractérisée en ce que la hauteur Ah dont la garniture d'étanchéité (14 à 17, 33 à 36, 50, 51, 65, 76), en graphite expansé et insérée entièrement dans la gorge annulaire, dépasse au total de la pièce de base (4, 23, 43, 61, 63, 73) est telle que la masse volumique de la garniture, après l'assemblage des deux brides (2, 3, 21, 22, 41, 42, 59, 60, 72, 72), est comprise entre 1,7 et 2,35 kg par dm³, rapportée au matériau de graphite.

6. Liaison par brides suivant la revendication 1, caractérisée en ce que les gorges annulaires (6 à 9, 24 à 27, 44, 45) ont une section transversale sensiblement rectangulaire.

7. Liaison par brides suivant la revendication 1, caractérisée en ce que l'axe de symétrie de la section transversale de la gorge annulaire (24 à 27) est incliné par rapport à l'axe de symétrie (28) de la pièce de base (23).

8. Liaison par brides suivant la revendication 7, caractérisée en ce que les sections transversales des gorges annulaires (24 à 27) concentriques immédiatement voisines sur des côtés opposés de la pièce de base (23) sont inclinées dans la même direction et de la même valeur.

9. Liaison par brides suivant la revendication 7, caractérisée en ce que les inclinations des axes de symétrie des sections transversales des gorges annulaires (24 à 27) concentriques sont respectivement opposées de chaque côté de la pièce de base (23).

10. Liaison par brides suivant la revendication 1, caractérisée en ce que la pièce de base (4, 23, 43, 61, 62) est en métal.

11. Liaison par brides suivant la revendication 1, caractérisée en ce que la pièce de base est en céramique.

12. Liaison par brides suivant la revendication 1, caractérisée en ce que la pièce de base est en carbone.

13. Liaison par brides suivant la revendication 6, caractérisée en ce que la surface des parties superficielles de la pièce de base (4, 23, 43, 61, 62), qui n'ont pas de gorges usinées au tour, est si grande qu'elle peut absorber la force de pression maximale mutuelle des deux brides (2, 3, 21, 22, 41, 42, 59, 60), sans être endommagée elle-même et sans endommager les surfaces d'étanchéité (18, 19, 27, 28, 56, 57, 63, 64) des brides.

14. Liaison par brides suivant la revendication 13, caractérisée en ce que les parties superficielles en relief de la pièce de base (4, 23) sont revêtues d'un matériau tendre.

15. Liaison par brides suivant la revendication 11, caractérisée par un revêtement en argent.

16. Liaison par brides suivant la revendication 14, caractérisée par un revêtement en cuivre.

17. Liaison par brides suivant la revendication 1, caractérisée en ce que les creusures plates (10 à 13) ont un tracé en forme d'entonnoir.

FIG 1

FIG 2

FIG 3

FIG 4

12

FIG 5

P

D

FIG 6

d,D

P

FIG 7